# EUROPEAN PATENT APPLICATION

(11) **EP 1 154 030 A1**
(43) Date of publication of application: **14.11.2001**
(21) Application number: 00600004.6
(22) Date of filing: 11.05.2000
(51) Int. Cl.: C22F 3/00, C22F 1/04, A62D 3/00, B65D 1/12

(54) **Method for the improvement of the biological effects of aluminium, its alloys and its chemical compounds**

(71) Applicant: Nikolaou, Athanasios, 19100 Megara (Attikis) (GR)
(72) Inventor: Nikolaou, Athanasios, 19100 Megara (Attikis) (GR)
(74) Representative: Panagiotidou, Effimia

(57) **Abstract**

A method using electronic or electromechanical technology to improve the biological effects and to reduce the toxic properties of aluminium, of products made from aluminium, alloys containing aluminium and aluminium chemical compounds (2), endowing the aluminium products (2) with food and beverage preservative properties, and even neutralising the toxicity of the industrial wastes (1) of the production and the processing of aluminium.

This is done by directing towards the aluminium products (1) and (2) an emission of electromagnetic waves (6) of multiple frequencies produced by electronic or electromechanical devices (3), emitted at one or more wide frequency ranges of the electromagnetic spectrum, covering the frequency area from 1Hz to 300GHz, either through a pulsatory or a temporally interruptible mode, or a pulsatory and a temporally interruptible mode of emission within the range or ranges of these sequences.

## Description

The present invention regards a method which uses electronic or electromechanical technology to improve the biological effects and neutralize the toxicity of the products derived from aluminium, the alloys containing aluminium and the chemical compounds containing aluminium, directing electromagnetic waves of multiple frequencies towards these products, in one or more wide ranges of electromagnetic wave frequencies, of the electromagnetic spectrum from 1 Hz up to 300 GHz, either through a pulsatory or a temporally interruptible emission mode in that range.

The largest production and use of aluminium internationally takes place in the USA and the EE. In 1963, the USA produced about 11.5 billion aluminium cans for beverages. In 1985, they produced 70 billion aluminium cans. All beverages contain various preservatives. The most common preservative is phosphoric acid. Phosphoric acid releases aluminium ions from the walls of the cans. This means that each beverage can feeds the consumer of the beverage with aluminium. In addition, a lot of foods contain aluminium in various chemical compounds, in small quantities, as in mixtures for sweets, confectionery flours, processed cheeses, baking powder, food improvements, preservatives, food anticoagulants and so on. These force on the consumer more aluminium. Aluminium cans, aluminium foil in contact with foods and cooking utensils, as well as aluminium in pharmaceutical products (e.g., antacids) result in the accumulation of aluminium in the human body. The minimum intake quantity of the majority of the population of the industrialised countries is 30 to 50ml per person per day. Thus, the continuing accumulation of aluminium in the human being results in its reaching dangerous toxic levels.

Aluminium is a potential toxin as it inhibits the absorption of choline and dopalomine by the brain. Both are vital chemical components that are released during the neural transmission stimulation, notwithstanding their part in the neural transmission of the signal to the muscles and the various glands. A result of the presence of aluminium ions in the brain is an adverse effect on thought and judgement, as well as on memory. Moreover, there is substantial evidence that the aluminium ions alter the enzymes which participate in the acetylocholic metabolism, affecting the interaction between thought process and movement coordination, causing, as a result, ataxy to a person's mobility. Also, other serious problems as evident as the Alzheimer's syndrome, as well as 'old-age' degenerative conditions. (Banks, W., et al., 'Aluminium increases permeability of blood - brain barrier to labelled DSIP and beta-endorphin: possible implications for senile and dialysis dementias'; Lancet, vol. 26, Nov. 1983, p. 1227; Guest, j., et al., 'The effects of aluminium on sodium-potassium-activated adenosine triphosphatese activity and choline uptake in rat brain synaptosomes', Biochemical Pharmacology, vol. 29, 1980, p. 141; Wong, P.C., et al, 'The effects of aluminium on the methylation of phospolipids in the rat brain synaptosomal membrane', Biochemical Pharmacology, vo. 30, 1981, p. 1704; Simpson, J., et al, 'Cholinergic enzymes in neurofibrillary degeneration produced by aluminium', Brain Research, vol 197, 1980, pp. 269-274). It is also known that aluminium is responsible for osteopathy, pneumonic fibrosis, liver deficiency and others.
To date there exists no method applicable to aluminium products, its alloys or its chemical compounds, which can limit their toxic effect before they are used by the consumer by the consumer. Only aluminium toxicity protection or avoidance methods are being pursued, and these focus on the environment, for example, recycling, biological cleaning of wastes, special fertilizers, use of filters and so on. Finally, within the framework of the attempts to safeguard against aluminium toxicity, we must include the reception by man of calcium in cheloid form with magnesium, garlic in lecithin tablets and multivitamin B Complex, B6 and B12.

The preservation of foods and beverages is achieved either by refrigeration, irradiation, use of chemical preservatives or with pasteurizing. However, there exists no method for the improvement of the biological effects of aluminium products, its alloys or its chemical compounds, which can achieve further preservation of foods and beverages.

The aim of the present invention is to offer a solution to the above-mentioned problem of the neutralisation of the harmful effects aluminium products, its alloys and its chemical compounds, cause to the ecosystem and the biological organisms, as well as the achievement of further preservation of foods and beverages using aluminium packaging treated with this method.

Applying this method, we can achieve an improvement in the biological effects and a neutralisation of the toxic properties of aluminium, alloys containing aluminium and aluminium chemical compounds, endowing aluminium products with food and beverage preservation properties, even neutralising the toxicity of the industrial waste of aluminium production and of the aluminium processing waste products. This is done by directing towards the aluminium products an emission of electromagnetic waves of multiple frequencies, produced by electronic or electromechanical devices, and emitted in one or more wide frequency ranges of the electromagnetic spectrum, from 1Hz to 300GHz, using an emission of a wide frequency range or ranges of electromagnetic waves which is either pulsatory or temporally interruptible, or pulsatory and temporally interruptible.

The present method is applicable to all products of any quality of aluminium, alloys containing aluminium and its chemical compounds, namely, to the products designed to reach the final user directly, as well as to the products which, having been manufactured, are to be forwarded to processing industries for further processing, and, finally to the products which, having been processed by the processing industries, are to be forwarded to the final user.

One advantage of this method is that it has wide industrial applications and, in addition, it does not require changes in the implemented specifications of the existing industrial or manufacturing installations, both during the stage of the production of aluminium, its alloys and its chemical compounds, and during the stage of the production of the final product and immediately before its introduction to the market.
Another advantage of this method is that it is chiefly applied directly to the final product, even after its packaging and while it is still in the storage areas, such as industrial and manufacturing storehouses; also, in storage areas of liquid or solid wastes of aluminium production industries and aluminium product processing small industries.
Another advantage of this method is that its application is financially sound, as it requires very low operating cost, and the labour cost required for the application of the method is almost negligible.
Another advantage of this method is that it can be applied even if between the emission source of the frequency ranges of the electromagnetic waves and the aluminium products, its alloys and its chemical compounds and its liquid or solid wastes, there exists material of any kind, such as cardboard, concrete, metals, with the exception of conductive materials which are grounded (Faraday cage).
Furthermore, an advantage of this method is that the beginning of the improvement of the biological effects and the reduction of the toxicity of aluminium occurs with the beginning of the application of the method, while the required application time for the achievement of an effective improvement is short, measured in hours. For example, a volume of one cubic meter of aluminium products, such as aluminium foil and cups or cans, can be processed with this method within 20 hours.

At the end of the application of the method to all this volume of aluminium products there will be added preservative properties to the foods or the beverages packaged with these processed aluminium products. These food and beverage preservative properties added to aluminium supplement the preservation of foods and beverages without negating any of the existing preservation methods of these products.

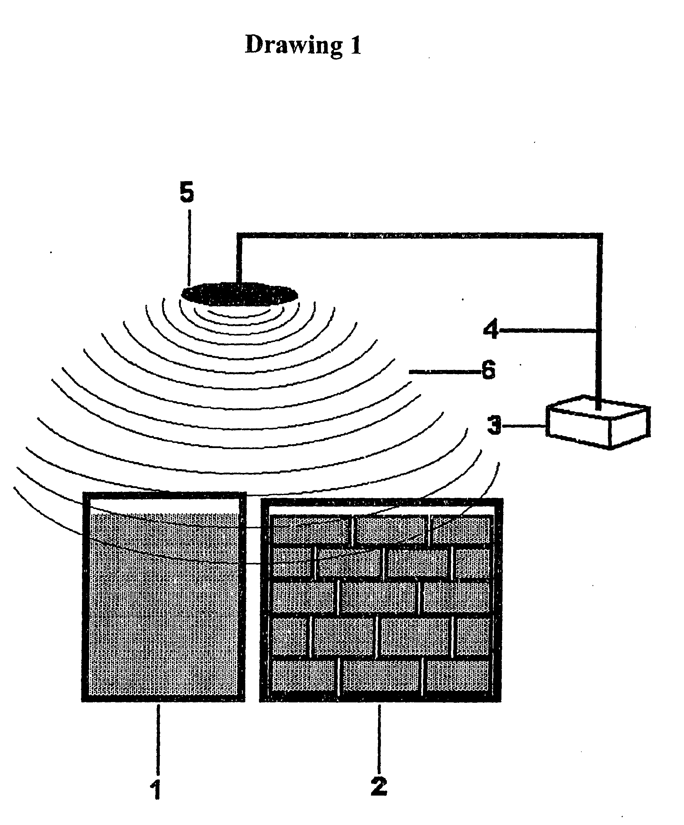

The invention is summarily described below through the use of non-limiting examples and with reference to the attached drawing, which shows one application form of the method constituting the subject of the present invention. The drawing depicts an application mode of the invention, on final or not aluminium products, its alloys and its chemical compounds, and on liquid or solid industrially produced aluminium wastes or wastes of aluminium processed products.

One way of applying the invention is described with reference to the drawing. Aluminium products, its alloys and its chemical compounds (1), are placed in customary storage areas, either packaged in the customary way or ready for transport (pallets, containers, etc.) in the customary temperature; the same is true for liquid or solid wastes (2) of aluminium industrial production or wastes of aluminium processed products. Near them is placed an electronic or electromechanical device (3) which produces electromagnetic waves (6) of multiple frequencies and modulates the emission mode of the range of these frequencies, from which emerges a conductor (4) connecting it with their emission antenna (5). The electromagnetic waves (6) of multiple frequencies are directed towards the aluminium products, its alloys and its chemical compounds (1) and its liquid or solid wastes (2). The emission antenna (5) may constitute an inherent part of the emission device (3) or it may be connected to it with a conductor (4).

To apply the method, we use an electronic or electromechanical device (3), or devices, producing electromagnetic waves (6) of multiple frequencies, which are emitted in a wide range of frequencies covering the range of the electromagnetic spectrum from 1Hz up to 300 GHz.

The produced emission of the electromagnetic waves (6) of multiple frequencies covering the frequency range of the electromagnetic spectrum from 1Hz up to 300GHz, either of one or more areas of the above-mentioned frequency range of the electromagnetic waves, must not be continuous but discontinuous, that is, either pulsatory or interruptible, or a combination of the two, that is, pulsatory and interruptible. Potentially, the emission covering the whole frequency range from 1Hz up to 300GHz, or parts of it, should last, for example, for 40µsec, followed by a pause (pulsatory emission), then another 40µsec, followed by a pause and so on. Also, potentially, the emission covering the whole frequency range from 1Hz up to 300GHz, or parts of it, should last, for example, for 40µsec, followed by a pause of 2µsec (interruptible emission), then by an emission for 40µsec, followed by a pause of 2µsec and so on.

Also, potentially, the emission of the electromagnetic waves (6) of multiple frequencies covering the whole frequency range from 1Hz up to 300GHz, or parts of it, must last, for example, for 40µsec, followed by a pause of 2µsec (interruptible emission), then by an emission for 40µsec, then a pause (pulsatory), followed by an emission lasting for 40µsec, followed by a pause of 2µsec and so on.

Potentially, the emission of electromagnetic waves (6) of multiple frequencies covering the whole frequency range from 1Hz up to 300GHz, or parts of it, may contain all the combinations of the pulsatory and interruptible emission mode of the multiple electromagnetic waves (6).

The electromagnetic waves (6) of multiple frequencies used in the application of the method may not be modulated or be modulated in any way. Such as FM (frequency modulation), AM (amplitude modulation), pulse code modulation, or any other modulation.
The method becomes more effective by using more than one emissions of electromagnetic waves (6) of multiple frequencies simultaneously in the same area, programmed to emit electromagnetic waves (6) of multiple and varied frequencies of the same or different power.
For example, a device producing electromagnetic waves (6) of multiple frequencies consisting of a transmitter emitting in the electromagnetic wave (6) frequency range from 50Hz up to 100KHz, and a transmitter emitting in the electromagnetic wave (6) frequency range from 10MHz up to 1000MHz, as well as a transmitter emitting in the electromagnetic wave (6) frequency range from 900MHz up to 100GHz.
Also, one way of realising the method through electronic technology is to use an emission source of electromagnetic waves (6) of multiple frequencies covering a wide frequency range of the electromagnetic spectrum from 1Hz up to 300GHz.

The device consists of three units: the first unit comprises an oscillator of square waves with an adjustable activity cycle, meaning that at output an adjustment will give us square waves of 3µsec duration each, at 2µsec intervals; this output signal of the first unit guides the second unit comprising a transistor used as a supply collector, namely, it is from its collector that we will be getting the supply voltage for the third unit. The third unit comprises a power oscillator of 400mwatt output, tuned at a 9MHz frequency. Knowing that the emission frequency of a free oscillator is connected with the supply voltage stability, we create a frequency drift in its operation by interrupting its supply from the second unit, namely, the supply convector, so that the frequency increases when the voltage decreases, and the frequency decreases when the voltage increases. Thus, with the oscillator operating at a voltage modulated by the signal we produced with the first and second units, we will have a temporally interruptible emission of a wide spectrum of electromagnetic wave frequencies. With a spectrum analyser, we can establish that the frequency range of the electromagnetic spectrum covered by this circuit has the form of pulses and extends from 5KHz up to 1500GHz.

The method results in the achievement of a substantial improvement of the biological effects of aluminium products, its alloys and its chemical compounds (2), so that the final product reaching and used by the consumer is non-toxic, in addition to the fact that it provides additional preservative properties to the foods and beverages contained in aluminium packages processed by this method. Also, with the use of this method, we succeed in neutralising the toxicity of the wastes (1) of the aluminium producing industries and aluminium product manufacturing industries.

## Claims

1. A method for the improvement of the biological effects and the neutralisation of the toxic properties of aluminium, products based on aluminium, alloys containing aluminium and aluminium chemical compounds (2), endowing the aluminium products (2) with preservative food and beverage properties, as well as the neutralisation of the toxicity of the industrial wastes (1) of the aluminium production and the wastes of the aluminium processed products, directing towards the aluminium products (1) and (2) an emission of electromagnetic waves (6) of multiple frequencies produced by electronic or electromechanical devices (3), emitted in one or more wide frequency ranges of the electromagnetic spectrum, from 1Hz up to 300GHz, with the application of the method being **characterised by** the emission mode of the wide frequency range of the electromagnetic waves (6), which is either pulsatory or temporally interruptible, or pulsatory and temporally interruptible.

2. A method for the improvement of the biological effects of aluminium, its alloys and its chemical compounds (1) and (2), according to claim 1, where the method of emission of electromagnetic waves (6) of multiple frequencies is **characterized by** the fact that its spectral area covers the electromagnetic wave (6) frequency range from 1Hz up to 300GHz.

3. A method for the improvement of the biological effects of aluminium, its alloys and its chemical compounds (1) and (2), according to claims 1 and 2, where the emission of electromagnetic waves (6) of multiple frequencies is **characterized by** the fact that it is also realised with one or more wide electromagnetic wave (6) frequency ranges of the electromagnetic spectrum frequencies from 1Hz up to 300GHz, together with the harmonic frequencies of the electromagnetic waves (6) produced by the device or devices used for the application of the method.

4. A method for the improvement of the biological effects of aluminium, its alloys and its chemical compounds (1) and (2), according to claims 1, 2 and 3, which is **characterized by** the fact that all, some or one of the emitted electromagnetic waves (6) of multiple frequencies used in this method may be modulated in any way or may be not modulated at all.

5. A method for the improvement of the biological effects of aluminium, its alloys and its chemical compounds (1) and (2), according to claims 1, 2, 3 and 4, which is **characterized by** the fact that the temporal duration of the output pulses, or the cluster of the output pulses, of the emission of the electromagnetic waves (6) of multiple frequencies, as well as the temporal duration of the interruptible emissions, may be of constant or alternating swing.

6. A method for the improvement of the biological effects of aluminium, its alloys and its chemical compounds (1) and (2), according to claims 1, 2, 3, 4 and 5, which is **characterized by** the fact that it is realised by directing one or more emissions of electromagnetic waves (6) of multiple frequencies simultaneously or not towards the same area.

7. A method for the improvement of the biological effects of aluminium, its alloys and its chemical compounds (1) and (2), according to claims 1, 2, 3, 4, 5 and 6, which is **characterised by** the fact that the electromagnetic waves (6) of multiple frequencies are of the same or different frequencies, even of the same or different power.
